# EUROPEAN PATENT APPLICATION

(11) **EP 4 074 500 A1**
(43) Date of publication of application: **19.10.2022**
(21) Application number: 22168037.4
(22) Date of filing: 12.04.2022
(51) Int. Cl.: B29D 35/06

(54) **SOCK WITH INJECTION MOULDED SOLE**

(30) Priority: 12.04.2021 PT 2021117174
(71) Applicant: Fiuis LDA, 3860-529 Estarreja (PT)
(72) Inventor: FERRO PEREIRA, JOAQUIM FERNANDO, 4500-652 ESPINHO (PT)
(74) Representative: Patentree

(57) **Abstract**

Process for making a sock with an injection moulded sole with an injection mould comprising two lateral outer side frames, raising the bottom stamp to close the moulding volume and a foot-shaped inner shoe last, the method comprising the steps of: putting on a textile sock onto the shoe last; lowering the shoe last into a moulding volume; enclosing the moulding volume by laterally bringing together the two side frames until the two side frames meet; raising the bottom stamp to close the moulding volume; injecting the moulding volume surrounding the shoe last with a melted polymer; awaiting until the polymer has solidified; bringing laterally apart the two side frames sufficiently that the shoe last may be raised from the side frames; raising the shoe last; removing the sock with injection moulded sole from the shoe last; wherein the two lateral outer side frames define a foot-shaped negative mould forming a liquid-tight volume for a sole under the shoe last. Sock with an injection moulded sole obtained by the process.

## Description

### TECHNICAL FIELD

The present disclosure relates to a sock with injection moulded sole, and a process for making the sock with injection moulded sole.

### GENERAL DESCRIPTION

It is disclosed a process for making a sock with an injection moulded sole with an injection mould comprising two lateral outer mould halves (i.e. side frames), a bottom stamp, and a foot-shaped inner mould core (i.e. a shoe last), the method comprising the steps of:
putting on a textile sock onto the shoe last;
lowering the shoe last into the moulding volume;
enclosing the moulding volume by laterally bringing together the two side frames until the two side frames meet;
raising the bottom stamp to close the moulding volume;
injecting the moulding volume surrounding the shoe last with a melted plastic (i.e. a polymer);
awaiting until the polymer has solidified;
bringing laterally apart the two side frames halves sufficiently that the shoe last maybe raised from the side frames;
raising the shoe last;
removing the sock with injection moulded sole from the shoe last;
wherein the two lateral outer side frames together with the bottom stamp define a foot-shaped negative mould forming a liquid-tight volume for a sole under the shoe last.

It is also disclosed a process for making a sock with an injection moulded sole with an injection mould comprising two lateral outer mould halves (i.e. side frames), and a foot-shaped inner mould core (i.e. a shoe last), the method comprising the steps of:
putting on a textile sock onto the shoe last;
lowering the shoe last into the moulding volume;
enclosing the moulding volume by laterally bringing together the two side frames until the two side frames meet;
injecting the moulding volume surrounding the shoe last with a melted plastic (i.e. a polymer);
awaiting until the polymer has solidified;
bringing laterally apart the two side frames halves sufficiently that the shoe last maybe raised from the side frames;
raising the shoe last;
removing the sock with injection moulded sole from the shoe last;
wherein the two lateral outer side frames define a foot-shaped negative mould forming a liquid-tight volume for a sole under the shoe last.

An embodiment comprises the steps of:
subsequent to the lowering of the shoe last and to the laterally bringing together of the two side frames, raising a bottom stamp until the bottom stamp meets the two joined side frames; and
preceding the bringing apart of the two side frames and the raising of the shoe
last, lowering the bottom stamp;
wherein the two lateral outer side frames, together with the bottom stamp, define a foot-shaped negative mould forming a liquid-tight volume for a sole under the shoe last.

In an embodiment, the two lateral outer side frames, together with the bottom stamp if existing, define a foot-shaped negative mould forming a liquid-tight volume for a sole under the shoe last and laterally surrounding, fully or partially, the shoe last.

An embodiment comprises previously to putting on the textile sock onto the shoe last, applying an interlining layer to the outside of the textile sock in an area to receive the injection moulded sole. This interlining layer is arranged between the textile and the polymer. The interlining layer avoids some discomfort for the user because, otherwise, it would feel some friction between the textile and the polymer when walking.

In an embodiment, the interlining layer extends around sock preserving a margin from the moulding volume boundaries.

In an embodiment, the margin is 5-10mm wide. Preferably the margin is 5mm to provide comfort for the user.

In an embodiment, the interlining layer is made of taffeta.

In an embodiment, the polymer is polyurethane, preferably is polyurethane system based on a three components polyester, suitable for high quality low density midsole for shoes. Preferably the polymer is prepared from a polyester resin with additives, a crosslinker comprising a mixture of short chain glycols, activators and additives for cell regulation and stabilization and prepolymer MDI (Methylene diphenyl diisocyanate) based for PU soles systems.

In an embodiment, the polyurethane is a bio-polyurethane.

Sock with an injection moulded sole obtained by the process according to any of the disclosed embodiments.

### BRIEF DESCRIPTION OF THE DRAWINGS

The following figures provide preferred embodiments for illustrating the disclosure and should not be seen as limiting the scope of invention.
**Figure 1** shows a schematic representation of an embodiment of sock with injection moulded sole.
**Figure 2** shows a schematic side representation of an embodiment of sock with injection moulded sole.
**Figure 3** shows a schematic longitudinal (i.e. along the foot longer axis) cross-section representation of an embodiment of sock with injection moulded sole.
**Figure 4** shows a schematic transversal cross-section representation of an embodiment of sock with injection moulded sole.
**Figure 5** shows a schematic representation of an embodiment of the mould for obtaining a sock with injection moulded sole, including a foot shape shoe last.
**Figure 6** shows a schematic side representation of an embodiment of the mould for obtaining a sock with injection moulded sole, including a foot shape shoe last.
**Figure 7** shows a schematic longitudinal cross-section representation of an embodiment of the mould for obtaining a sock with injection moulded sole, including a foot shape shoe last.
**Figure 8** shows a schematic transversal cross-section representation of an embodiment of the mould for obtaining a sock with injection moulded sole, including a foot shape shoe last.

### DETAILED DESCRIPTION

The present disclosure relates to a sock with injection moulded sole, and a process for making the sock with injection moulded sole.

In an embodiment, the sock is made of any textile material and comprises a polymeric sole.

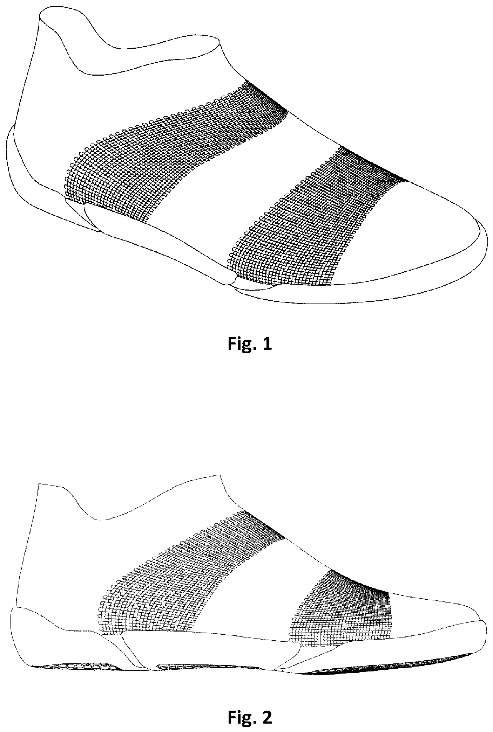

**Figures 1** and **2** are schematic representation of an embodiment of sock with injection moulded sole.

The sock with injection moulded is a single piece. The injection moulded allows the user not to slip when walking only with the shoe.

In an embodiment, the injection moulded is a polymer, preferably a polyurethane and more preferably a bio - polyurethane.

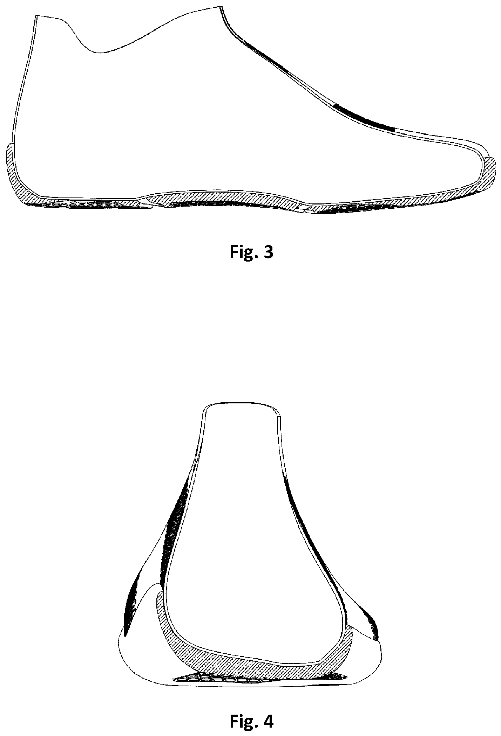

**Figure 3** is a schematic longitudinal (i.e. along the foot longer axis) cross-section representation of an embodiment of sock with injection moulded sole.

In this representation it can be seen the interlining layer.

In an embodiment, the interlining layer extends around sock preserving a margin from the moulding volume boundaries. Preferably the margin is 5 - 10 mm wide.

The interlining layer avoids the user to feel some discomfort on his toes when walking which results from the friction between the textile and the polymer.

Preferably the sole is made out of a polyurethane material. The main difference of this material in respect to a standard polyester based polyurethane is that this one is made through the refinement of vegetable based dicarbossilic acid and glycols, not impacting on the food chain. The chemical reaction between the resulting polyester resin, entirely made of this bio based components, and a standard MDI based prepolymer, grants the 49% bio content as declared from TuV lab in Austria, following the norm EN 16640.

**Figure 4** is a schematic transversal cross-section representation of an embodiment of sock with injection moulded sole.

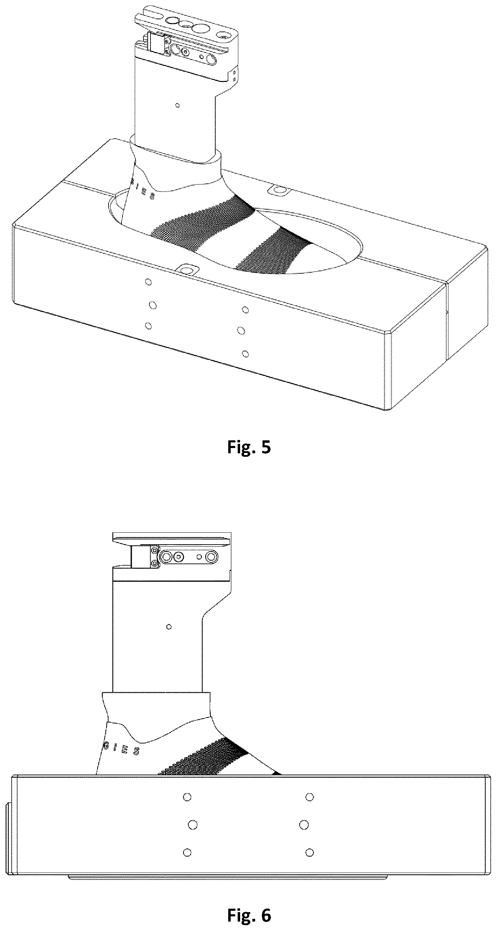

**Figure 5** is a schematic representation of an embodiment of the mould for obtaining a sock with injection moulded sole, including a foot shape shoe last. In this figure it can be seen two lateral outer side frames and a foot-shaped inner shoe last for receiving the sock.

The process for making a sock with an injection moulded sole with an injection mould comprises the steps of putting on a textile sock onto the shoe last;
lowering the shoe last into a moulding volume;
enclosing the moulding volume by laterally bringing together the two side frames until the two side frames meet;
raising the bottom stamp to close the moulding volume;
injecting the moulding volume surrounding the shoe last with a melted polymer; awaiting until the polymer has solidified;
bringing laterally apart the two side frames sufficiently that the shoe last may be raised from the side frames;
raising the shoe last;
removing the sock with injection moulded sole from the shoe last;
wherein the two lateral outer side frames together with the bottom stamp define a foot-shaped negative mould forming a liquid-tight volume for a sole under the shoe last.

In an embodiment, the process further comprises the steps of:
subsequent to the lowering of the shoe last and to the laterally bringing together of the two side frames, raising a bottom stamp until the bottom stamp meets the two joined side frames; and
preceding the bringing apart of the two side frames and the raising of the shoe last, lowering the bottom stamp;
wherein the two lateral outer side frames, together with the bottom stamp, define a foot-shaped negative mould forming a liquid-tight volume for a sole under the shoe last.

**Figure 6** is a schematic side representation of an embodiment of the mould for obtaining a sock with injection moulded sole, including a foot shape shoe last.

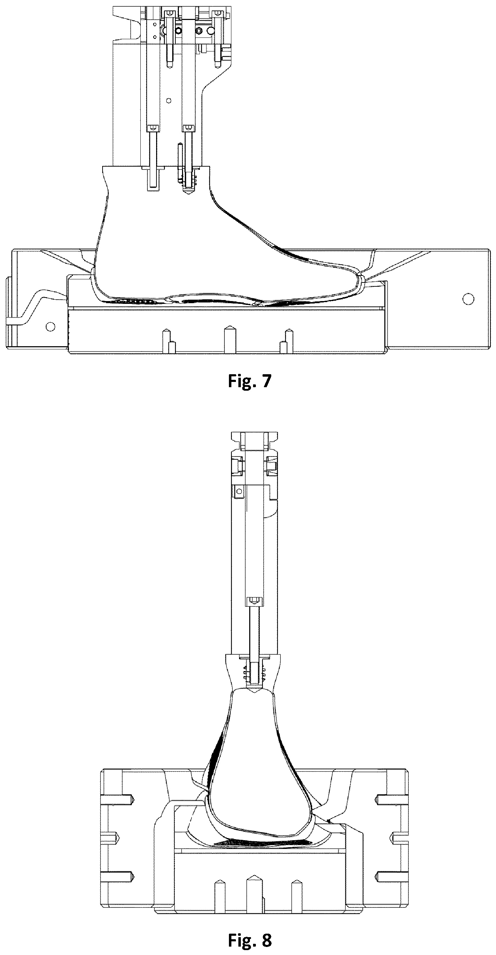

**Figure 7** is a schematic longitudinal cross-section representation of an embodiment of the mould for obtaining a sock with injection moulded sole, including a foot shape shoe last.

**Figure 8** is a schematic transversal cross-section representation of an embodiment of the mould for obtaining a sock with injection moulded sole, including a foot shape shoe last.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. Process for making a sock with an injection moulded sole with an injection mould comprising two lateral outer side frames and a foot-shaped inner shoe last, the method comprising the steps of:
putting on a textile sock onto the shoe last;
lowering the shoe last into a moulding volume;
enclosing the moulding volume by laterally bringing together the two side frames until the two side frames meet;
raising the bottom stamp to close the moulding volume;
injecting the moulding volume surrounding the shoe last with a melted polymer;
awaiting until the polymer has solidified;
bringing laterally apart the two side frames sufficiently that the shoe last may be raised from the side frames;
raising the shoe last;
removing the sock with injection moulded sole from the shoe last;
wherein the two lateral outer side frames together with the bottom stamp define a foot-shaped negative mould forming a liquid-tight volume for a sole under the shoe last.

2. Process according to the previous claim further comprising the steps of:
subsequent to the lowering of the shoe last and to the laterally bringing together of the two side frames, raising a bottom stamp until the bottom stamp meets the two joined side frames; and
preceding the bringing apart of the two side frames and the raising of the shoe
last, lowering the bottom stamp;
wherein the two lateral outer side frames, together with the bottom stamp, define a foot-shaped negative mould forming a liquid-tight volume for a sole under the shoe last.

3. Process according to any of the previous claims, wherein the two lateral outer side frames, together with the bottom stamp if existing, define a foot-shaped negative mould forming a liquid-tight volume for a sole under the shoe last and laterally surrounding, fully or partially, the shoe last.

4. Process according to any of the previous claims comprising previously to putting on the textile sock onto the shoe last, applying an interlining layer to the outside of the textile sock in an area to receive the injection moulded sole.

5. Process according to the previous claim wherein the interlining layer extends around sock preserving a margin from the moulding volume boundaries.

6. Process according to the previous claim wherein the margin is 5-10 mm wide.

7. Process according to any of the claims 4-6 wherein the interlining layer is made of taffeta.

8. Process according to any of the previous claims wherein the polymer is polyurethane.

9. Process according to the previous claim wherein the polyurethane is a bio-polyurethane.

10. Sock with an injection moulded sole obtained by the process according to any of the previous claims.
